# EUROPEAN PATENT SPECIFICATION

(11) **EP 2 843 874 B1**
(45) Date of publication and mention of the grant of the patent: **30.03.2016**
(21) Application number: 13182095.3
(22) Date of filing: 28.08.2013
(51) Int. Cl.: H04L 12/24

(54) **Integration network device and service integration method thereof**
Integrationsnetzwerkvorrichtung und Dienstintegrationsverfahren dafür
Dispositif de réseau d'intégration et son procédé d'intégration de services

(43) Date of publication of application: 04.03.2015
(73) Proprietor: Institute for Information Industry, Taipei (TW)
(72) Inventor: Lai, Jen-Yuan, Tainan City (TW); Chin, Shan, New Taipei City (TW); Wang, Feng-Sheng, Tainan City (TW)
(74) Representative: Michalski Hüttermann & Partner Patentanwälte mbB

(56) References cited:
- WO-A1-2013/079093
- US-A1- 2011 295 891
- US-A1- 2012 303 814

## Description

### CROSS-REFERENCES TO RELATED APPLICATIONS

Not applicable.

### BACKGROUND OF THE INVENTION

### Field of the Invention

The present invention relates to an integration network device and a service integration method thereof; and more particularly, the integration network device and the service integration method thereof according to the present invention are used for the integration of different cloud computing systems.

### Descriptions of the Related Art

In conventional cloud computing, user can use the resources of the cloud system. Particularly, user can store and access the data in the cloud system; moreover, user can even use the applications deployed at the cloud system end and retrieve the results only. Accordingly, the storage and the computing resource at the user end can be saved efficiently. However, in the existed cloud computing structures, the resources user can use at a time are almost limited in one cloud system.

Further speaking, in the current cloud computing structures, once a user connects to a cloud system, the user can use only the resources of the cloud system. Therefore, since each cloud system works independently, the user's on-going works on one cloud system will be failed directly if the cloud system crashes. In other words, the user's work can not be processed through different cloud systems since each cloud system works independently. Accordingly, the uses of the current cloud systems will be very inflexible and limited.

US Patent Publication Number 2011/0295891 disclosing a "search device, search method, and search program" and being assigned to FUJITSU LIMITED is one of the prior art in this field. According to the technique taught in this document, it only discloses the search of stating point candidate of abnormality between different management ranges. However, it does not disclose any technique about integration of different cloud systems for possible crashes.

Hence, an urgent need exists in the art to integrate the different cloud systems for increasing the availability and the flexibility of cloud computing.

### SUMMARY OF THE INVENTION

The primary objective of this invention is to provide a service integration method for use in an integration network device. The integration network device is used in a hybrid cloud computing system. The hybrid cloud computing system comprises the integration network device and a plurality of management network devices. A VDI user device connects to the hybrid cloud computing system via network. The management network devices include a first management network device and a second management network device which are disposed in distinct cloud systems. The first management network device cooperates with at least one first application server. The second management network device cooperates with at least one second application server.

The service integration method comprises: (a) enabling the integration network device to receive a connecting request from the VDI user device; (b) enabling the integration network device to establish a connection between the VDI user device and the first management network device according to the connecting request; (c) enabling the integration network device to determine that the first management network device fails the connection according to a first management information, stored in the integration network device, of the first management network device; (d) enabling the integration network device to, after step (c), connect the VDI user device to the at least one second application server according to a second management information, stored in the integration network device, of the second management network device. The first management information relates to an availability of the at least one first application server, and the second management information relates to an availability of the at least one second application server.

Another objective of this invention is to provide an integration network device for used in a hybrid cloud computing system. The hybrid cloud computing system comprises the integration network device and a plurality of management network devices. A VDI user device connects to the hybrid cloud computing system via network. The management network devices include a first management network device and a second management network device which are disposed in distinct cloud systems. The first management network device cooperates with at least one first application server. The second management network device cooperates with at least one second application server.

The integration network device comprises a transceiver, a processing unit and a storage unit. The transceiver is configured to receive a connecting request from the VDI user device. The storage unit is configured to store a first management information of the first management network device and a second management information of the second management network device. The first management information relates to an availability of the at least one first application server and the second management information relates to an availability of the at least one second application server. The processing unit is configured to establish a connection between the VDI user device and the first management network device via the transceiver according to the connecting request, to determine that the first management network device fails the connection according to a first management information, and to connect the VDI user device to the at least one second application server according to the second management information via the transceiver.

The detailed technology and preferred embodiments implemented for the subject invention are described in the following paragraphs accompanying the appended drawings for people skilled in this field to well appreciate the features of the claimed invention.

### BRIEF DESCRIPTION OF THE DRAWINGS

**FIG. 1A** is a schematic view of a network environment of an integration network device according to the first embodiment of the present invention;
**FIG. 1B** is a block diagram of the integration network device according to the first embodiment of the present invention;
**FIG. 2** is a schematic view of another network environment of the integration network device according to the second embodiment of the present invention;
**FIG. 3** is a flowchart diagram of a service integration method according to the third embodiment of the present invention; and
**FIG. 4** is a flowchart diagram of a service integration method according to the fourth embodiment of the present invention.

### DESCRIPTION OF THE PREFERRED EMBODIMENT

The present invention may be explained with reference to the following embodiments thereof. However, these embodiments are not intended to limit the present invention to any specific environments, applications or implementations described in these embodiments. Therefore, description of these embodiments is only for purpose of illustration rather than to limit the present invention. In the following embodiments and the attached drawings, elements not directly related to the present invention are omitted from depiction; and dimensional relationships among individual elements in the attached drawings are illustrated only for ease of understanding but not to limit the actual scale.

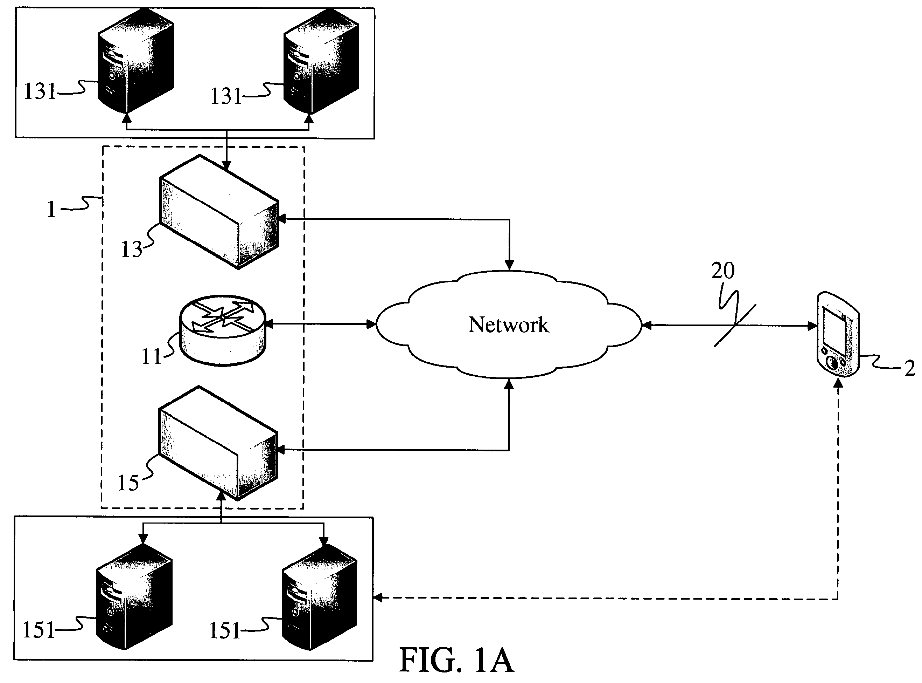

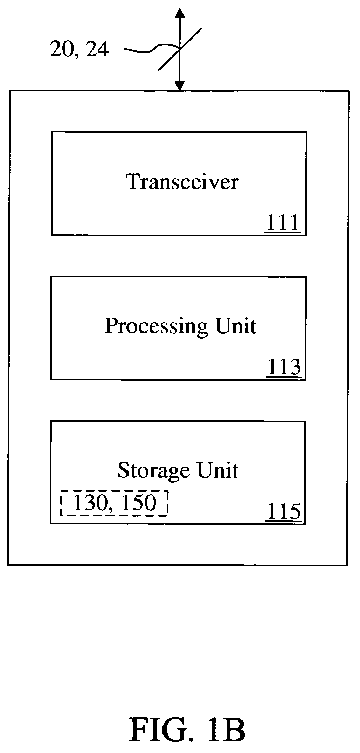

Refer to **FIG. 1A** and **FIG. 1B**. **FIG. 1A** is a schematic view of a network environment of an integration network device **11** according to a first embodiment of the present invention. The integration network **11** device is used in a hybrid cloud computing system **1.** The hybrid cloud computing system **1** further comprises a plurality of management network devices. In the first embodiment, the management network devices include a first management network device **13** and a second management network device **15** which are disposed in distinct cloud systems.

The first management network device **13** cooperates with at least one first application server **131** (There are two first application servers in the first embodiment). The second management network device cooperates with at least one second application server **151** (There are two second application servers in the first embodiment). A VDI user device **2** connects to the hybrid cloud computing system **1** via network. **FIG. 1B** is a block diagram of the integration network device **11** according to the first embodiment of the present invention. The integration network device **11** comprises a transceiver **111,** a processing unit **113** and a storage unit **115.**

It should be noted first that the storage unit **115** stores a first management information **130** of the first management network device **13** and a second management information **150** of the second management network device **15.** The first management information **130** relates to an availability of the first application servers **131,** the second management information **150** relates to an availability of the second application servers **151,** and the first management information **130** and the second management information **150** are updated in the storage unit **115** in real-time for the latest states of the first management network device **13** and the second management network device **15.** Interactions between the network components will be further elucidated hereinbelow.

Firstly, when a user wants to use an application deployed on the hybrid cloud computing system **1,** the user logins the integration network device **11** though the VDI user device **2** via network and transmits a connecting request **20.** Then, after the transceiver **111** of the integration network device **11** receives the connecting request **20,** the processing unit **113** of the integration network device **11** is capable of establishing a connection (not shown) between the VDI user device **2** and the first management network device **13** via the transceiver **111** according to the connecting request **20.**

Next, since the storage unit **115** of integration network device **11** stores the first management information **130** which relates to the availability of the first application servers **131,** the processing unit **113** of the integration network device **11** is capable of determining if the connection can be successful. In the first embodiment, the VDI user device **2** can not connect to the first application servers **131** because the first application servers **131** crashed or all the sessions of the first application servers **131** have been occupied. Accordingly, the processing unit **113** of the integration network device **11** determines that the first management network device **13** fails the connection according to the first management information **130.**

Afterwards, since the storage unit **115** of integration network device **11** stores the second management information **150** which relates to the availability of the second application server **131** and indicates that the second application servers **151** possess the resources for the VDI user device **2,** the processing unit **113** of the integration network device **11** connects the VDI user device **2** to the second application servers **151** according to the second management information **150** via the transceiver **111.** Therefore, the VDI user device **2** is capable of accessing the second application servers **151** via VDI protocol. It is noted that the VDI protocol should be know by the people in the art; therefore, it will not be further described.

It should be noted that, in details, there are two implementations of connecting the VDI user device **2** to the second application servers **151.** In the first implementation, the processing unit **113** of the integration network device **11** mounts the second application servers **151** (both or one of them) from the second management network device **15** to the first management network device **13** according to the second management information **150.**

More specifically, since there is already a connection between the first management network device **13** and the VDI user device **2** and the VDI user device **2** needs the resources of the second application servers **151,** the processing unit **113** can mount the second application servers **151** from the second management network device **15** to the first management network device **13** according to the second management information **150** and connect the VDI user device **2** to the second application servers **151** via the transceiver **111** so that the VDI user device **2** is capable of accessing the resources of the second application servers **151.**

On the other hand, in the second implementation, the processing unit **113** of the integration network device **11** routes the VDI user device **2** to the second management network device **15** (both or one of them) according to the second management information **150.** More specifically, since the processing unit **113** determined that the first management network device **13** fails the connection with the VDI user device **2,** the processing unit **113** can route the VDI user device **2** to the second management network device **15** and connect the VDI user device **2** to the second application servers **151** via the transceiver **111** so that the VDI user device **2** is capable of accessing the resources of the second application server **151.**

In the hybrid cloud computing system **1** described in the first embodiment, when VDI user device **2** tries to connect to the first management network device **13** and access the first application servers **131,** the integration network device **11** is capable of determining whether the first application servers **131** crashed or the sessions of the first application servers **131** have been occupied, and then connects the VDI user device **2** to available management network device which is the second management network device **15** in the first embodiment.

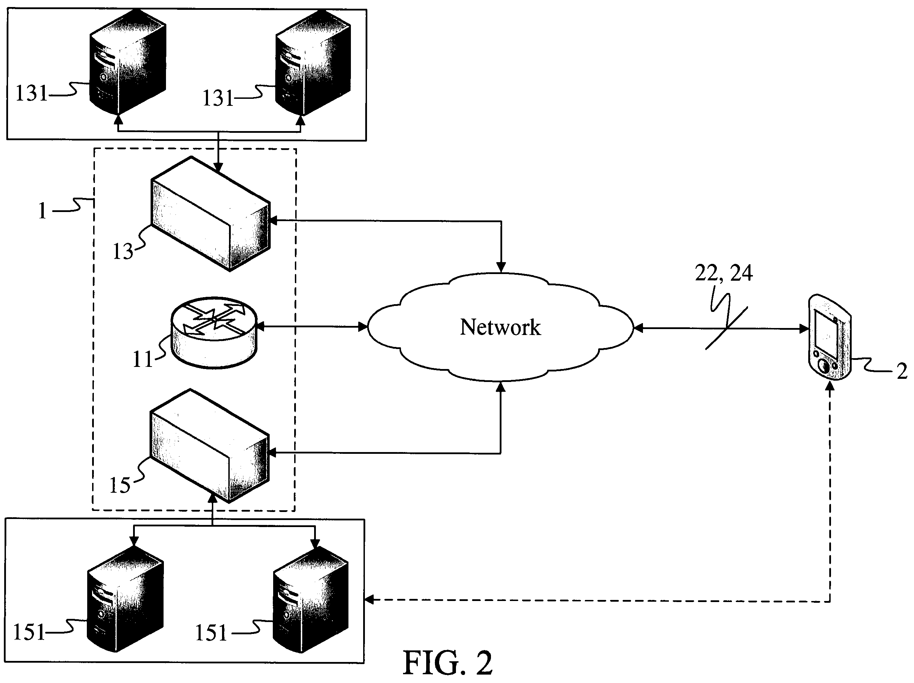

Please refer to **FIG. 2. FIG. 2** is a schematic view of another network environment of the integration network device **11** according to a second embodiment of the present invention. It shall be particularly noted that, the network structure structures of the second embodiment are similar to those of the first embodiment, so components bearing the same reference numerals have the same functions and will not be further described herein. The second embodiment gives more implemented details of the service integration method of the present invention.

Similarly, when a user wants to use an application deployed on the hybrid cloud computing system **1,** the user logins the integration network device **11** though the VDI user device **2** via network and transmits a connecting request **22.** Then, after the transceiver **111** of the integration network device **11** receives the connecting request **22,** the processing unit **113** of the integration network device **11** is capable of establishing a connection (not shown) between the VDI user device 2 and the first management network device **13** via the transceiver **111** according to the connecting request **22.**

Next, since the storage unit **115** of integration network device **11** stores the first management information **130** which relates to the availability of the first application servers 131, the processing unit **113** of the integration network device **11** is capable of determining if the connection can be successful. In the second embodiment, the first application servers **131** work well and posses the resources for the VDI user device **2.** Accordingly, the processing unit **113** of the integration network device **11** connects the VDI user device **2** to the first management network device **13** via the transceiver based on the connection. Therefore, the VDI user device **2** is capable of accessing the first application servers **131** via VDI protocol.

However, systems crash or the sessions are not enough sometimes. Accordingly, if the first management network device **13** crashed or the sessions of the first management network device **13** have been decreased afterward, and the unavailable state of the first management network device **13** is updated to the first management information **130** stored in the storage unit **115** of the integration network device **11,** the processing unit **113** of the integration network device **11** determines that the first management network device **13** fails the connection according to the first management information **130.**

Then, similarly, since the storage unit **115** of integration network device **11** stores the second management information **150** which relates to the availability of the second application server **131** and indicates that the second application servers **131** possess the resources for the VDI user device **2,** the processing unit **113** of the integration network device **11** seamlessly connects the VDI user device **2** to the second application servers **151** according to the second management information **150** via the transceiver **111.**

Therefore, the VDI user device **2** is capable of accessing the second application servers **151** via the VDI protocol and kept in the on-going state since the connecting is seamless. It should be noted that, the two implementations of connecting the VDI user device **2** to the second application servers **151** described in the first embodiment can also be applied in the second embodiment seamlessly, and the details will not be further described herein.

Moreover, after routing to the second management network device **15,** the VDI user device **2** is capable of requesting use of new VDI application. Specifically, when the user wants to executes new application on the cloud system, the user transmits an application request **24** to the integration network device **11** via the VDI user device **2.** In other words, the transceiver **111** of the integration network device **11** receives the application request **24** from the VDI user device **2.** Therefore, a VDI application connection (not shown) can be established directly between the VDI user device **2** and the second management network device **15,** and the processing unit **113** of the integration network device **11** maintains the VDI application connection.

In the hybrid cloud computing system **1** described in the second embodiment, when VDI user device **2** has connected to the first management network device **13** but failed later, the integration network device **11** is capable of determining if the first application servers **131** is unavailable as well, and then routing the VDI user device **2** to available management network device which is the second management network device **15** in the second embodiment.

It should be noted that it is not intended to limit the numbers of the management network devices and the applications servers of the present invention and those skilled in the art can readily know from the disclosures of the present invention that the numbers of the management network devices and the applications servers can be dynamically increased. In addition, to prevent the crash of the hybrid cloud computing system, redundant device for the integration network device can be deployed.

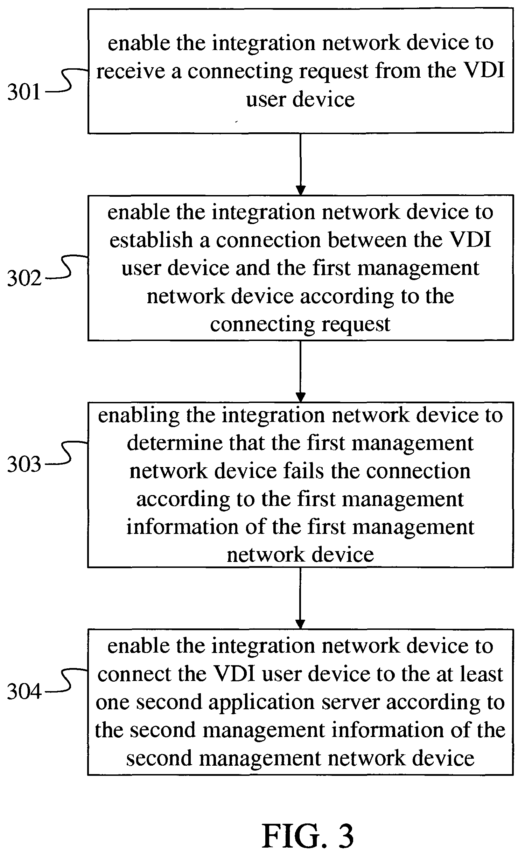

Referring to **FIG. 3****,** there is shown a flowchart diagram of a service integration method according to a third embodiment of the present invention. The service integration method of the third embodiment is for use in an integration network device (e.g., the integration network device of the first embodiment). The integration network device is used in a hybrid cloud computing system. The hybrid cloud computing system further comprises a plurality of management network devices. The management network devices include a first management network device and a second management network device which are disposed in distinct cloud systems.

The first management network device cooperates with at least one first application server. The second management network device cooperates with at least one second application server. A VDI user device connects to the hybrid cloud computing system via network. It should be noted first that a first management information of the first management network device and a second management information of the second management network device are stored in the integration network device. The first management information relates to an availability of the first application servers, the second management information relates to an availability of the second application servers. Steps of the power adjustment method of the third embodiment will be detailed as follows.

First, step **301** is executed to enable the integration network device to receive a connecting request from the VDI user device. Then, step **302** is executed to enable the integration network device to establish a connection between the VDI user device and the first management network device according to the connecting request.

Step **303** is executed to enabling the integration network device to determine that the first management network device fails the connection according to the first management information of the first management network device. Finally, step **304** is executed to enable the integration network device to connect the VDI user device to the at least one second application server according to the second management information of the second management network device so that the VDI user device is capable of accessing the at least one second application server.

Similarly, step **304** can be implemented in two ways at least. First, since there is already a connection between the first management network device and the VDI user device and the VDI user device needs the resources of the at least one second application server, the integration network device can mount the at least one second application server from the second management network device to the first management network device according to the second management information and connect the VDI user device to the at least one second application server so that the VDI user device is capable of accessing the resources of the at least one second application server.

Secondly, since the integration network device determined that the first management network device failed the connection with the VDI user device, the integration network device can route the VDI user device to the second management network device according to the second management information and connect the VDI user device to the at least one second application server so that the VDI user device is capable of accessing the resources of the at least one second application server.

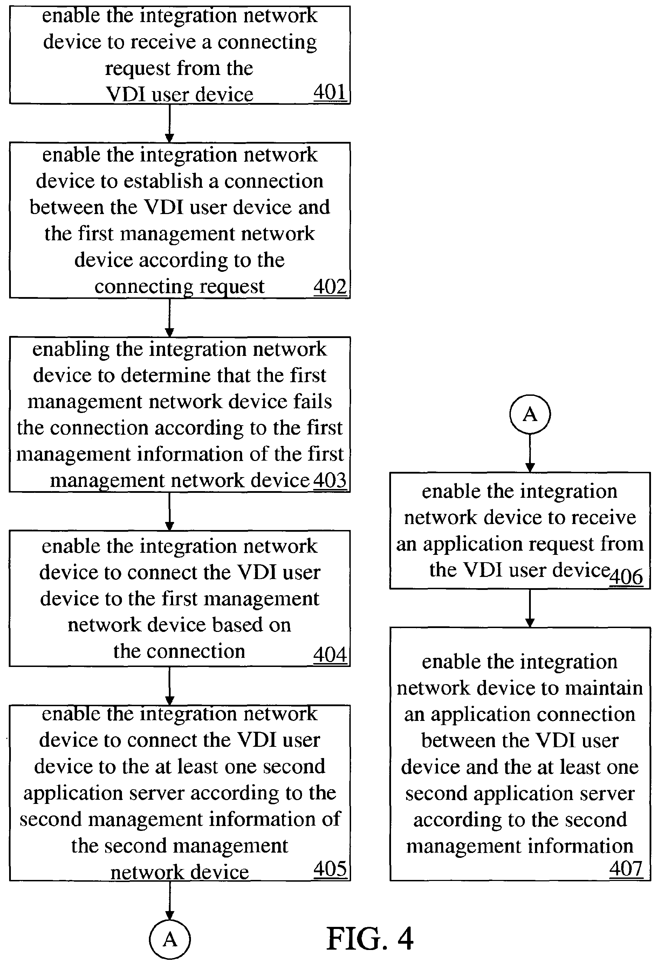

Referring to **FIG. 4****,** there is shown a flowchart diagram of a service integration method according to a fourth embodiment of the present invention. The service integration method of the third embodiment is for use in an integration network device (e.g., the integration network device of the second embodiment). The integration network device is used in a hybrid cloud computing system. The hybrid cloud computing system further comprises a plurality of management network devices. The management network devices include a first management network device and a second management network device which are disposed in distinct cloud systems.

The first management network device cooperates with at least one first application server. The second management network device cooperates with at least one second application server. A VDI user device connects to the hybrid cloud computing system via network. It should be noted first that a first management information of the first management network device and a second management information of the second management network device are stored in the integration network device. The first management information relates to an availability of the first application servers, the second management information relates to an availability of the second application servers. Steps of the power adjustment method of the third embodiment will be detailed as follows.

Similarly, step **401** is executed to enable the integration network device to receive a connecting request from the VDI user device. Step **402** is executed to enable the integration network device to establish a connection between the VDI user device and the first management network device according to the connecting request. Then, if the first management network device is available, step **403** is executed to enable the integration network device to connect the VDI user device to the first management network device based on the connection so that the VDI user device is capable of accessing the at least one first application server.

Afterwards, when the first management network device is unavailable, step **404** is executed to enable the integration network device to determine that the first management network device fails the connection according to the first management information of the first management network device. Step **405** is executed to enable the integration network device to connect the VDI user device to the at least one second application server according to the second management information of the second management network device so that the VDI user device is capable of accessing the at least one second application server.

It should noted that, if new application is needed to be executed, step **406** can be executed to enable the integration network device to receive an application request from the VDI user device, and step **407** is then executed to enable the integration network device to maintain an application connection between the VDI user device and the at least one second application server according to the second management information.

According to the above descriptions of the integration network device and the service integration method thereof of the present invention, the different cloud systems are integrated for increasing the availability and the flexibility of cloud computing, and the user can use the resources of the hybrid cloud computing system simultaneously.

The above disclosure is related to the detailed technical contents and inventive features thereof. People skilled in this field may proceed with a variety of modifications and replacements based on the disclosures and suggestions of the invention as described without departing from the characteristics thereof. Nevertheless, although such modifications and replacements are not fully disclosed in the above descriptions, they have substantially been covered in the following claims as appended.

## Claims

1. A service integration method for use in an integration network device (11), the integration network device (11) being used in a hybrid cloud computing system (1), the hybrid cloud computing system (1) comprising the integration network device (11) and a plurality of management network devices, a virtual desktop infrastructure (VDI) user device (2) connecting to the hybrid cloud computing system (1) via network, the management network devices including a first management network device (13) and a second management network device (15) which are disposed in distinct cloud systems, the first management network device (13) cooperating with at least one first application server (131), the second management network device (15) cooperating with at least one second application server (151), the service integration method comprising:
(a) enabling the integration network device (11) to receive a connecting request (20, 22) from the VDI user device (2);
(b) enabling the integration network device (11) to establish a connection between the VDI user device (2) and the first management network device (13) according to the connecting request (20, 22);
(c) enabling the integration network device (11) to determine that the first management network device (13) fails the connection according to a first management information (13), stored in the integration network device (11), of the first management network device (13), wherein the first management information (130) relates to an availability of the at least one first application server (131);
(d) enabling the integration network device (11) to, after step (c), connect the VDI user device (2) to the at least one second application server (151) according to a second management information (150), stored in the integration network device (11), of the second management network device (15), wherein the second management information (15) relates to an availability of the at least one second application server (151).

2. The service integration method as claimed in claim 1, wherein step (d) further comprises the following steps:
(d1) enabling the integration network device (11) to mount the at least one second
application server (151) from the second management network device (15) to the first management network device (13) according to the second management information (150); and
(d2) enabling the integration network device (11) to connect the VDI user device (2) to the at least one second application server (151).

3. The service integration method as claimed in claim 1, wherein step (d) further comprises the following steps:
(d1) enabling the integration network device (11) to route the VDI user device (2) to the second management network device (15) according to the second management information (150); and
(d2) enabling the integration network device (11) to connect the VDI user device (2) to the at least one second application server (151).

4. The service integration method as claimed in any of claims 1 to 3, further comprising the following step before step (c):
(c1) enabling the integration network device (11) to connect the VDI user device (2) to the first management network device (13) based on the connection so that the VDI user device (2) is capable of accessing the at least one first application server (131) via VDI protocol.

5. The service integration method as claimed in any of claims 1 to 4, further comprising the following step after step (d):
(e) enabling the integration network device (11) to receive an application request (24) from the VDI user device (2); and
(f) enabling the integration network device (11) to, after receiving the application request (24), maintain a VDI application connection between the VDI user device (2) and the at least one second application server (151) according to the second management information (150).

6. The service integration method as claimed in any of claims 1 to 5, wherein the integration network device (11) connects the VDI user device (2) to the at least one second application server (151) seamlessly.

7. An integration network device (11) for used in a hybrid cloud computing system (1), the hybrid cloud computing system (1) comprising the integration network device (11) and a plurality of management network devices, VDI user device (2) connecting to the hybrid cloud computing system (1) via network, the management network devices including a first management network device (13) and a second management network device (15) which are disposed in distinct cloud systems, the first management network device (13) cooperating with at least one first application server (131), the second management network device (15) cooperating with at least one second application server (151), the integration network device (11) comprising:
a processing unit (113);
a transceiver (111), being configured to receive a connecting request (20, 22) from the VDI user device (2); and
a storage unit (115), being configured to store a first management information (130) of the first management network device (13) and a second management information (150) of the second management network device (15), wherein the first management information (130) relates to an availability of the at least one first application server (131) and the second management information (150) relates to an availability of the at least one second application server (151);
wherein the processing unit (113) is configured to establish a connection between the VDI user device (2) and the first management network device (13) via the transceiver (111) according to the connecting request (20, 22), to determine that the first management network device (13) fails the connection according to a first management information (130), and to connect the VDI user device (2) to the at least one second application server (151) according to the second management information (150) via the transceiver (111).

8. The integration network device (11) as claimed in claim 7, wherein the processing unit (113) is further configured to mount the at least one second application server (151) from the second management network device (15) to the first management network device (13) according to the second management information (150), and to connect the VDI user device (2) to the at least one second application server (151) via the transceiver (111).

9. The integration network device (11) as claimed in claim 7 or 8, wherein the processing unit (113) is further configured to route the VDI user device (2) to the second management network device (15) according to the second management information (150), and to connect the VDI user device (2) to the at least one second application server (151) via the transceiver (111).

10. The integration network device (11) as claimed in any of claims 7 to 9, wherein the processing unit (113) is further configured to connect the VDI user device (2) to the first management network device (13) via the transceiver (111) based on the connection before the first management network device (15) fails the connection so that the VDI user device (2) is capable of accessing the at least one first application server (131) via VDI protocol.

11. The integration network device (11) as claimed in any of claims 7 to 10, wherein the processing unit (113) is further configured to maintain an application connection between the VDI user device (2) and the at least one second application server (151) according to the second management information (15) via the transceiver (111) after the transceiver (111) receives an application request (24) from the VDI user device (2).

12. The integration network device (11) as claimed in any of claims 7 to 11, wherein the processing unit (113) is further configured to connect the VDI user device (2) to the at least one second application server (151) via the transceiver (111) seamlessly.

## Patentansprüche

1. Diensteintegrationsverfahren zur Verwendung in einer Integrationsnetzwerkvorrichtung (11), wobei die Integrationsnetzwerkvorrichtung (11) in einem Hybrid-Cloud-Rechensystem (1) verwendet wird, wobei das Hybrid-Cloud-Rechensystem (1) die Integrationsnetzwerkvorrichtung (11) und mehrere Managementnetzwerkvorrichtungen und ein über ein Netzwerk mit dem Hybrid-Cloud-Rechensystem (1) verbundenes VDI- (Virtual Desktop Infrastructure) Benutzergerät aufweist, wobei die Managementnetzwerkvorrichtungen eine erste Managementnetzwerkvorrichtung (13) und eine zweite Managementnetzwerkvorrichtung (15) aufweisen, die in verschiedenen Cloud-Systemen angeordnet sind, wobei die erste Managementnetzwerkvorrichtung (13) mit mindestens einem ersten Anwendungsserver (131) zusammenarbeitet und die zweite Managementnetzwerkvorrichtung (15) mit mindestens einem zweiten Anwendungsserver (151) zusammenarbeitet,
wobei das Diensteintegrationsverfahren die Schritte aufweist:
(a) Veranlassen, dass die Integrationsnetzwerkvorrichtung (11) eine Verbindungsanforderung (20, 22) vom VDI-Benutzergerät (2) empfängt;
(b) Veranlassen, dass die Integrationsnetzwerkvorrichtung (11) gemäß der Verbindungsanforderung (20, 22) eine Verbindung zwischen dem VDI-Benutzergerät (2) und der ersten Managementnetzwerkvorrichtung (13) aufbaut;
(c) Veranlassen, dass die Netzwerkmanagementvorrichtung (11) gemäß einer in der Integrationsnetzwerkvorrichtung (11) gespeicherten ersten Managementinformation (130) der ersten Managementnetzwerkvorrichtung (13) bestimmt, ob der Verbindungsaufbau zur ersten Managementnetzwerkvorrichtung (13) erfolgreich ist oder nicht, wobei die erste Managementinformation (130) mit einer Verfügbarkeit des mindestens einen ersten Anwendungsservers (131) in Beziehung steht; und
(d) Veranlassen, dass die Integrationsnetzwerkvorrichtung (11) nach Schritt (c) das VDI-Benutzergerät mit dem mindestens einen ersten Anwendungsserver (151) verbindet, gemäß einer in der Integrationsnetzwerkvorrichtung (11) gespeicherten zweiten Managementinformation (150) der zweiten Managementnetzwerkvorrichtung (15), wobei die zweite Managementinformation (15) mit einer Verfügbarkeit des mindestens einen zweiten Anwendungsservers (151) in Beziehung steht.

2. Verfahren nach Anspruch 1, wobei Schritt (d) ferner die folgenden Schritte aufweist:
(d1) Veranlassen, dass die Integrationsnetzwerkvorrichtung (11) den mindestens einen zweiten Anwendungsserver (151) von der zweiten Managementnetzwerkvorrichtung (15) auf die erste Managementnetzwerkvorrichtung (13) schaltet, gemäß der zweiten Managementinformation (150); und
(d2) Veranlassen, dass die Integrationsnetzwerkvorrichtung (11) das VDI-Benutzergerät (2) mit dem mindestens einen zweiten Anwendungsserver (151) verbindet.

3. Verfahren nach Anspruch 1, wobei Schritt (d) ferner die folgenden Schritte aufweist:
(d1) Veranlassen, dass die Integrationsnetzwerkvorrichtung (11) das VDI-Benutzergerät (2) zur zweiten Managementnetzwerkvorrichtung (15) weiterleitet, gemäß der zweiten Managementinformation (150); und
(d2) Veranlassen, dass die Integrationsnetzwerkvorrichtung (11) das VDI-Benutzergerät (2) mit dem mindestens einen zweiten Anwendungsserver (151) verbindet.

4. Verfahren nach einem der Ansprüche 1 bis 3, ferner mit dem folgenden Schritt vor Schritt (c):
(c1) Veranlassen, dass die Integrationsnetzwerkvorrichtung (11) das VDI-Benutzergerät (2) mit der ersten Managementnetzwerkvorrichtung (13) verbindet, basierend auf der aufgebauten Verbindung, so dass das VDI-Benutzergerät (2) in der Lage ist, über ein VDI-Protokoll auf den mindestens einen ersten Anwendungsserver (131) zuzugreifen.

5. Verfahren nach einem der Ansprüche 1 bis 4, ferner mit den folgenden Schritten nach Schritt (d):
(e) Veranlassen, dass die Integrationsnetzwerkvorrichtung (11) eine Anwendungsanforderung (24) vom VDI-Benutzergerät (2) empfängt; und
(f) Veranlassen, dass die Integrationsnetzwerkvorrichtung (11) nach dem Empfang der Anwendungsanforderung (24) eine VDI-Anwendungsverbindung zwischen dem VDI-Benutzergerät (2) und dem mindestens einen zweiten Anwendungsserver (151) aufrechterhält, gemäß der zweiten Managementinformation (150).

6. Verfahren nach einem der Ansprüche 1 bis 5, wobei die Integrationsnetzwerkvorrichtung (11) das VDI-Benutzergerät (2) nahtlos mit dem mindestens einen zweiten Anwendungsserver (151) verbindet.

7. Integrationsnetzwerkvorrichtung (11) zur Verwendung in einem Hybrid-Cloud-Rechensystem (1), wobei das Hybrid-Cloud-Rechensystem (1) die Integrationsnetzwerkvorrichtung (11) und mehrere Managementnetzwerkvorrichtungen und ein über ein Netzwerk mit dem Hybrid-Cloud-Rechensystem verbundenes VDI-Benutzergerät (2) aufweist, wobei die Managementnetzwerkvorrichtungen eine erste Managementnetzwerkvorrichtung (13) und eine zweite Managementnetzwerkvorrichtung (15) aufweisen, die in verschiedenen Cloud-Systemen angeordnet sind, wobei die erste Managementnetzwerkvorrichtung (13) mit mindestens einem ersten Anwendungsserver (131) zusammenarbeitet und die zweite Managementnetzwerkvorrichtung (15) mit mindestens einem zweiten Anwendungsserver (151) zusammenarbeitet,
wobei die Integrationsnetzwerkvorrichtung (11) aufweist:
eine Verarbeitungseinheit (113);
einen Transceiver (111), der dafür konfiguriert ist, eine Verbindungsanforderung (20, 22) vom VDI-Benutzergerät (2) zu empfangen; und
eine Speichereinheit (115), die dafür konfiguriert ist, eine erste Managementinformation (130) der ersten Managementnetzwerkvorrichtung (13) und eine zweite Managementinformation (150) der zweiten Managementnetzwerkvorrichtung (15) zu speichern, wobei die erste Managementinformation (130) mit einer Verfügbarkeit des mindestens einen ersten Anwendungsservers (131) in Beziehung steht und die zweite Managementinformation (150) mit einer Verfügbarkeit des mindestens einen zweiten Anwendungsservers (151) in Beziehung steht,
wobei die Verarbeitungseinheit (113) dafür konfiguriert ist,
gemäß der Verbindungsanforderung (20, 22) über den Transceiver (111) eine Verbindung zwischen dem VDI-Benutzergerät (2) und der ersten Managementnetzwerkvorrichtung (13) aufzubauen,
gemäß der ersten Managementinformation (130) zu bestimmen, ob die Verbindung zur ersten Managementnetzwerkvorrichtung (13) erfolgreich ist oder nicht, und,
falls die Verbindung nicht erfolgreich ist, das VDI-Benutzergerät (2) gemäß der zweiten Managementinformation (150) über den Transceiver (111) mit dem mindestens einen zweiten Anwendungsserver (151) zu verbinden.

8. Vorrichtung (11) nach Anspruch 7, wobei die Verarbeitungseinheit (113) ferner dafür konfiguriert ist, den mindestens einen zweiten Anwendungsserver (151) gemäß der zweiten Managementinformation (150) von der zweiten Managementnetzwerkvorrichtung (15) auf die erste Managementnetzwerkvorrichtung (13) zu schalten und das VDI-Benutzergerät (2) über den Transceiver (111) mit dem mindestens einen zweiten Anwendungsserver (151) zu verbinden.

9. Vorrichtung (11) nach Anspruch 7 oder 8, wobei die Verarbeitungseinheit (113) ferner dafür konfiguriert ist, das VDI-Benutzergerät (2) gemäß der zweiten Managementinformation (150) zur zweiten Managementnetzwerkvorrichtung (15) weiterzuleiten und das VDI-Benutzergerät (2) über den Transceiver (111) mit dem mindestens einen zweiten Anwendungsserver (151) zu verbinden.

10. Vorrichtung (11) nach einem der Ansprüche 7 bis 9, wobei die Verarbeitungseinheit (113) ferner dafür konfiguriert ist, das VDI-Benutzergerät (2) basierend auf der aufgebauten Verbindung über den Transceiver (111) mit der ersten Managementnetzwerkvorrichtung (13) zu verbinden, bevor die Verbindung zur ersten Managementnetzwerkvorrichtung (15) fehlschlägt, so dass das VDI-Benutzergerät (2) in der Lage ist, über ein VDI-Protokoll auf den mindestens einen ersten Anwendungsserver (131) zuzugreifen.

11. Vorrichtung (11) nach einem der Ansprüche 7 bis 10, wobei die Verarbeitungseinheit (113) ferner dafür konfiguriert ist, eine Anwendungsverbindung zwischen dem VDI-Benutzergerät (2) und dem mindestens einen zweiten Anwendungsserver (151) gemäß der zweiten Managementinformation (15) über den Transceiver (111) aufrechtzuerhalten, nachdem der Transceiver (111) eine Anwendungsanforderung (24) vom VDI-Benutzergerät (2) empfangen hat.

12. Vorrichtung (11) nach einem der Ansprüche 7 bis 11, wobei die Verarbeitungseinheit (113) ferner dafür konfiguriert ist, das VDI-Benutzergerät (2) über den Transceiver (111) nahtlos mit dem mindestens einen zweiten Anwendungsserver (151) zu verbinden.

## Revendications

1. Procédé d'intégration de services pour l'utilisation d'un dispositif de réseau d'intégration (11), le dispositif de réseau d'intégration (11) étant utilisé dans un système informatique hybride dématérialisé (1), le système informatique hybride dématérialisé (1) comprenant le dispositif de réseau d'intégration (11) et une pluralité de dispositifs de réseaux de gestion, un dispositif utilisateur (2) d'infrastructure de bureau virtuel (VDI) relié au système informatique hybride dématérialisé (1) via le réseau, les dispositifs de réseaux de gestion incluant un premier dispositif de réseau de gestion (13) et un deuxième dispositif de réseau de gestion (15) qui sont disposés dans des systèmes dématérialisés distincts, le premier dispositif de réseau de gestion (13) coopérant avec au moins un premier serveur d'application (131), le deuxième dispositif de réseau de gestion (15) coopérant avec au moins un deuxième serveur d'application (151), le procédé d'intégration de services comprenant :
(a) l'autorisation, pour le dispositif de réseau d'intégration (11), de recevoir une requête de connexion (20, 22) en provenance du dispositif utilisateur du VDI (2) ;
(b) l'autorisation, pour le dispositif de réseau d'intégration (11), d'établir une liaison entre le dispositif utilisateur du VDI (2) et le premier dispositif de réseau de gestion (13) selon la requête de connexion (20, 22) ;
(c) l'autorisation, pour le dispositif de réseau d'intégration (11), de déterminer que le premier dispositif de réseau de gestion (13) échoue à se connecter selon une première information de gestion (130), stockée dans le dispositif de réseau d'intégration (11), du premier dispositif de réseau de gestion (13), où la première information de gestion (130) se rapporte à la disponibilité de l'au moins un premier serveur d'application (131) ;
(d) l'autorisation, pour le dispositif de réseau d'intégration (11), après l'étape (c), de relier le dispositif utilisateur du VDI (2) avec l'au moins un deuxième serveur d'application (151) selon une deuxième information de gestion (150) stockée dans le dispositif de réseau d'intégration (11) du deuxième dispositif de réseau de gestion (15), où la deuxième information de gestion (15) se rapporte à la disponibilité de l'au moins un deuxième serveur d'application (151).

2. Procédé d'intégration de services selon la revendication 1, dans lequel l'étape (d) comprend en outre les étapes suivantes :
(d1) l'autorisation, pour le dispositif de réseau d'intégration (11), de monter l'au moins un deuxième serveur d'application (151) à partir du deuxième dispositif de réseau de gestion (15) vers le premier dispositif de réseau de gestion (13) selon la deuxième information de gestion (150) ; et
(d2) l'autorisation, pour le dispositif de réseau d'intégration (11), de relier le dispositif utilisateur du VDI (2) avec l'au moins un deuxième serveur d'application (151).

3. Procédé d'intégration de services selon la revendication 1, dans lequel l'étape (d) comprend en outre les étapes suivantes :
(d1) l'autorisation, pour le dispositif de réseau d'intégration (11), de router le dispositif utilisateur du VDI (2) vers le deuxième dispositif de réseau de gestion (15) selon la deuxième information de gestion (150) ; et
(d2) l'autorisation, pour le dispositif de réseau d'intégration (11), de relier le dispositif utilisateur du VDI (2) avec l'au moins un deuxième serveur d'application (151).

4. Procédé d'intégration de services selon l'une quelconque des revendications 1 à 3, comprenant en outre l'étape suivante avant l'étape (c) :
(c1) l'autorisation, pour le dispositif de réseau d'intégration (11), de relier le dispositif utilisateur du VDI (2) avec le premier dispositif de réseau de gestion (13) sur la base de la connexion de sorte que le dispositif utilisateur du VDI (2) est en mesure d'accéder à l'au moins un premier serveur d'application (131) via un protocole VDI.

5. Procédé d'intégration de services selon l'une quelconque des revendications 1 à 4, comprenant en outre l'étape suivante après l'étape (d) :
(e) l'autorisation, pour le dispositif de réseau d'intégration (11), de recevoir une requête d'application (24) en provenance du dispositif utilisateur du VDI (2) ; et
(f) l'autorisation, pour le dispositif de réseau d'intégration (11), après la réception de la requête d'application (24), de maintenir la connexion de l'application VDI entre le dispositif utilisateur du VDI (2) et l'au moins un deuxième serveur d'application (151) selon la deuxième information de gestion (150).

6. Procédé d'intégration de services selon l'une quelconque des revendications 1 à 5, dans lequel le dispositif de réseau d'intégration (11) relie de manière ininterrompue le dispositif utilisateur du VDI (2) avec l'au moins un deuxième serveur d'application (151).

7. Dispositif de réseau d'intégration (11) destiné à être utilisé dans un système informatique hybride dématérialisé (1), le système informatique hybride dématérialisé (1) comprenant le dispositif de réseau d'intégration (11) et une pluralité de dispositifs de réseaux de gestion, le dispositif utilisateur du VDI (2) étant relié au système informatique hybride dématérialisé (1) via le réseau, les dispositifs de réseaux de gestion incluant un premier dispositif de réseau de gestion (13) et un deuxième dispositif de réseau de gestion (15) qui sont disposés dans des systèmes dématérialisés distincts, le premier dispositif de réseau de gestion (13) coopérant avec au moins un premier serveur d'application (131), le deuxième dispositif de réseau de gestion (15) coopérant avec au moins un deuxième serveur d'application (151), le dispositif de réseau d'intégration (11) comprenant :
une unité de traitement (113) ;
un émetteur-récepteur (111), qui est configuré pour recevoir une requête de connexion (20, 22) en provenance du dispositif utilisateur du VDI (2) ; et
une unité de stockage (115), qui est configurée pour stocker une première information de gestion (130) du premier dispositif de réseau de gestion (13) et une deuxième information de gestion (150) du deuxième dispositif de réseau de gestion (15), où la première information de gestion (130) se rapporte à la disponibilité du au moins un premier serveur d'application (131) et la deuxième information de gestion (150) se rapporte à la disponibilité du au moins un deuxième serveur d'application (151) ;
où l'unité de traitement (113) est configurée pour établir une connexion entre le dispositif utilisateur du VDI (2) et le premier dispositif de réseau de gestion (13) via l'émetteur-récepteur (111) selon la requête de connexion (20, 22), pour déterminer que le premier dispositif de réseau de gestion (13) échoue à se connecter selon une première information de gestion (130), et pour relier le dispositif utilisateur du VDI (2) à l'au moins un deuxième serveur d'application (151) selon la deuxième information de gestion (150) via l'émetteur-récepteur (111).

8. Dispositif de réseau d'intégration (11) selon la revendication 7, dans lequel l'unité de traitement (113) est en outre configurée pour monter l'au moins un deuxième serveur d'application (151) à partir du deuxième dispositif de réseau de gestion (15) vers le premier dispositif de réseau de gestion (13) selon la deuxième information de gestion (150), et pour relier le dispositif utilisateur du VDI (2) à l'au moins un deuxième serveur d'application (151) via l'émetteur-récepteur (111).

9. Dispositif de réseau d'intégration (11) selon les revendications 7 ou 8, dans lequel l'unité de traitement (113) est en outre configurée pour router le dispositif utilisateur du VDI (2) vers le deuxième dispositif de réseau de gestion (15) selon la deuxième information de gestion (150), et relier le dispositif utilisateur du VDI (2) à l'au moins un deuxième serveur d'application (151) via l'émetteur-récepteur (111).

10. Dispositif de réseau d'intégration (11) selon l'une quelconque des revendications 7 à 9, dans lequel l'unité de traitement (113) est en outre configurée pour relier le dispositif utilisateur du VDI (2) avec le premier dispositif de réseau de gestion (13) via l'émetteur-récepteur (111) sur la base de la connexion avant que le premier dispositif de réseau de gestion (15) échoue à se connecter de sorte que le dispositif utilisateur du VDI (2) est en mesure d'accéder à l'au moins un premier serveur d'application (131) via le protocole VDI.

11. Dispositif de réseau d'intégration (11) selon l'une quelconque des revendications 7 à 10, dans lequel l'unité de traitement (113) est en outre configurée pour maintenir une connexion d'application entre le dispositif utilisateur du VDI (2) et l'au moins un deuxième serveur d'application (151) selon la deuxième information de gestion (15) via l'émetteur-récepteur (111) après que l'émetteur-récepteur (111) ait reçu une requête d'application (24) en provenance du dispositif utilisateur du VDI (2).

12. Dispositif de réseau d'intégration (11) selon l'une quelconque des revendications 7 à 11, dans lequel l'unité de traitement (113) est en outre configurée pour relier de manière ininterrompue le dispositif utilisateur du VDI (2) avec l'au moins un deuxième serveur d'application (151) via l'émetteur-récepteur (111).
